# FASCICULE DE BREVET EUROPEEN

(11) **EP 3 204 675 B1**
(45) Date de publication et mention de la délivrance du brevet: **25.07.2018**
(21) Numéro de dépôt: 15767507.5
(22) Date de dépôt: 24.09.2015
(51) Int. Cl.: F16K 11/07

(54) **VANNES MULTIVOIES À BOISSEAU COULISSANT, UTILISATION D'UNE TELLE VANNE POUR LE REFROIDISSEMENT ET LE CHARGEMENT/DECHARGEMENT DE CIBLES D'IRRADIATION DANS UNE CUVE DE RÉACTEUR NUCLEAIRE**
MEHRWEGE-SCHIEBERVENTIL UND VERWENDUNG EINES SOLCHEN VENTILS FÜR KÜHLUNG UND LADEN/ENTLADEN DES BESTRAHLUNGSZIELS IN EINEM KERNREAKTORBEHÄLTER
MULTI-WAY SLIDING VALVE AND USE OF SUCH A VALVE FOR COOLING AND LOADING/UNLOADING OF IRRADIATION TARGET IN A TANK FOR NUCLEAR REACTOR

(30) Priorité: 10.10.2014 FR 1459746
(43) Date de publication de la demande: 16.08.2017
(73) Titulaire: Commissariat à l'Énergie Atomique et aux Énergies Alternatives, 75015 Paris (FR)
(72) Inventeur: GAY, Sébastien, 04100 Manosque (FR); MOLLA, Alexandre, F-13770 Venelles (FR); ANTHONY, Muriel, F-83560 Saint Julien (FR)
(74) Mandataire: Nony
(86) Numéro de dépôt international: PCT/EP2015/072039
(87) Numéro de publication internationale: WO 2016/055281

(56) Documents cités:
- EP-A2- 1 762 765
- US-A- 3 937 253

## Description

### Domaine de l'invention

La présente invention concerne une vanne multivoies à boisseau coulissant.

L'application principale visée par l'invention est l'alimentation en fluide de cibles de matériaux nucléaire à irradier dans un réacteur nucléaire de recherche, à la fois lors de l'irradiation d'une cible et de son chargement/déchargement dans la piscine de réacteur.

Bien que décrite ci-après en référence à l'application principale, l'invention s'applique également à toute application industrielle dans laquelle il est nécessaire de réaliser l'alimentation en fluides d'un dispositif et leur évacuation sur plusieurs voies, et avantageusement des applications dans lesquelles le pilotage de vannes doit être simple.

Dans l'ensemble de la présente demande, les termes « inférieur », « supérieur », « vertical », « bas », haut », « dessous » et « dessus » sont à comprendre par référence, avec une vanne multivoies avec un corps dont l'alésage central est agencé à la verticale.

### Etat de la technique

Pour tester le comportement des matériaux et des combustibles soumis à des sollicitations thermiques, neutroniques, voire chimiques représentatives du fonctionnement en vraie grandeur dans un réacteur nucléaire industriel, il est courant d'utiliser des réacteurs de recherche, outils indispensables dans la recherche et le développement de la filière électronucléaire.

Ces réacteurs nucléaires de recherche sont aussi couramment appelés réacteurs d'irradiation car ils permettent de réaliser des expériences d'irradiation d'échantillons de matériaux nucléaires, tels que des combustibles nucléaires, en piscine à proximité de ou dans le coeur du réacteur.

En particulier, le réacteur de recherche qui sera prochainement mis en service en France, le réacteur Jules Horowitz (RJH) va permettre d'étudier le comportement de combustibles nucléaires selon différents scénarios d'irradiation.

Pour mettre en oeuvre les expériences d'irradiation dans les réacteurs d'irradiation, des dispositifs d'irradiation sont conçus spécifiquement en fonction notamment de leur emplacement dédié dans le coeur et ou à proximité dans une zone de concentration d'un flux irradiant.

Dans le réacteur RJH, il est prévu différents dispositifs d'irradiation conçus particulièrement pour l'étude des combustibles nucléaires et des matériaux de gaine des crayons logeant les combustibles nucléaires.

Ces dispositifs d'irradiation sont donc destinés à irradier différentes cibles de matériaux nucléaires au sein de la cuve de réacteur nucléaire de recherche.

Certains de ces dispositifs d'irradiation sont associés à un système de déplacement pour déplacer une ou plusieurs cibles à irradier. Ainsi, une cible à irradier est chargée, c'est-à-dire mise en place dans le dispositif d'irradiation immergé dans la cuve de réacteur, hors flux neutronique d'irradiation, puis l'ensemble est avancé vers le coeur du réacteur afin d'obtenir les performances neutroniques d'irradiation requises. Le déplacement de la cible est assuré par le système de déplacement qui peut avancer indépendamment chaque dispositif d'irradiation de sa position « reculée », i.e. hors irradiation, jusqu'à sa position « avancée » qui est la position d'irradiation. A l'inverse, une fois une expérimentation d'irradiation finie, la cible avec son dispositif est déplacée de la position avancée à sa position reculée, puis est déchargée.

Chacune des cibles à irradier doit être en permanence alimentée en fluide lorsqu'elle est dans la cuve.

Ainsi, en premier lieu lors de l'irradiation d'une cible, le dispositif qui l'intègre doit être alimenté en circuit principal fermé par un fluide caloporteur depuis l'extérieur de la cuve de réacteur, le fluide caloporteur ayant circulé sur la cible devant être en outre évacué du dispositif par retour vers l'extérieur au moyen de pompes.

En deuxième lieu, lors d'un chargement/déchargement d'une cible dans/depuis un dispositif d'irradiation, il est nécessaire de couper l'alimentation/évacuation du fluide caloporteur extérieur à la cuve tout en maintenant une circulation du fluide de cuve de réacteur à l'intérieur du dispositif. Il est d'ailleurs judicieux de prévoir de réaliser cette interruption de la circulation du fluide caloporteur dans le dispositif d'irradiation de la manière la moins brutale possible.

Enfin, en cas de rupture de l'alimentation du fluide caloporteur par le circuit principal, il est impératif d'assurer une alimentation du dispositif d'irradiation en fluide caloporteur par un circuit de secours ou secondaire puisque la cible est encore en position avancée ou d'irradiation.

Pour assurer la séquence de toutes ces circulations de fluide au sein de la cible, il a été envisagé jusqu'à présent de mettre en oeuvre plusieurs vannes. Ces nombreuses vannes peuvent être coûteuses, et délicates à mettre en oeuvre. En outre, la mise en oeuvre de plusieurs vannes implique un encombrement important. Or il est au contraire recherché un gain de place. Enfin, le pilotage individuel d'une vanne n'est pas forcément aisé à réaliser, d'autant plus qu'il doit être synchronisé avec celui des toutes les autres vannes envisagées. D'ailleurs, dans le pilotage d'un nombre important de vannes, le facteur humain du pilotage peut être source de risques car il ne faut absolument pas d'ouverture partielle d'une vanne car une ouverture partielle pourrait créer des déséquilibres thermique/hydrauliques dans le circuit. Autrement dit, il faut une vanne soit complètement ouverte, soit complètement fermée et ce, dans un encombrement réduit et un environnement hostile (sous irradiation).

Il existe donc un besoin pour améliorer les circulations en différents fluides au sein d'une cible destinée à être irradiée au sein d'une cuve de réacteur nucléaire et à être chargée/déchargée de cette cuve, notamment afin de simplifier la mise en oeuvre de la séquence de toutes les circulations de fluide au sein de la cible.

Plus généralement, il existe un besoin pour améliorer les circulations en différents fluides au sein d'une zone, notamment afin de simplifier la mise en oeuvre de la séquence de toutes les circulations.

Le but de l'invention est de répondre au moins en partie à ce(s) besoin(s). Les documents US3937253 et EP1762765 décrivent des vannes multivoies de type à boisseau coulissant.

### Exposé de l'invention

Pour ce faire, l'invention a tout d'abord pour objet une vanne multivoies, de type à boisseau coulissant comportant :
- un corps s'étendant selon un axe central et percé d'un alésage central, débouchant de part et d'autre du corps; et d'au moins quatre orifices principaux, agencés deux à deux de part et d'autre de l'axe central, chacun des orifices principaux débouchant d'une part sur l'extérieur du corps et d'autre part sur l'alésage central en étant en regard d'un autre des orifices principaux ;
- un noyau de forme générale cylindrique, comportant deux rétrécissements de diamètre distants l'un de l'autre d'une distance correspondant à l'entre-axes entre deux orifices pncipaux du corps, le noyau étant percé de deux canaux dont l'un est débouchant d'une part sur une des extrémités axiales du noyau et d'autre part sur sa périphérie radiale entre les deux rétrécissements, et dont l'autre est débouchant d'une part sur l'autre des extrémités axiales du noyau et d'autre part sur sa périphérie radiale entre l'un des deux rétrécissements et l'autre des extrémités axiales du noyau,
   vanne dans laquelle le noyau est monté au moins coulissant dans l'alésage central du corps de telle sorte que :
   - dans une première position de coulissement, les orifices principaux en regard l'un de l'autre sont en communication fluidique deux-à-deux au moyen d'un des rétrécissements tandis que les deux canaux ne débouchent pas dans les orifices principaux ;
   - dans une deuxième position de coulissement, les deux canaux débouchent chacun dans l'un des deux des orifices principaux situés du même côté de l'axe central du corps tandis qu'aucun des orifices principaux n'est en communication fluidique avec un autre des orifices principaux.

Ainsi, l'invention consiste en une seule vanne à au moins six voies possible, dont l'unique déplacement en coulissement du noyau permet de changer de configuration hydraulique entre les six voies.

Avec une vanne selon l'invention, on réduit le nombre vannes et le risque associé au pilotage en comparaison avec un ensemble à au moins trois vannes à boisseaux sphériques selon l'état de l'art.

Le pilotage du changement de position de coulissement du noyau de vannes selon l'invention est simple à effectuer, par exemple manuellement. Lorsque la vanne est dans un milieu à environnement contrôlé, comme lorsqu'elle est immergée dans une cuve de réacteur, un opérateur peut ainsi facilement à l'aide d'une simple perche de manutention, effectuer le déplacement du noyau. Si l'on prévoit de verrouiller le noyau dans une position de coulissement, une simple rotation supplémentaire peut permettre de déclencher le coulissement. En outre, si l'on munit la vanne d'un ressort de rappel vers l'une des positions de coulissement, le coulissement depuis vers l'autre des positions de coulissement peut s'effectuer par la seule action du ressort, sans qu'il y ait à fournir d'effort pour faire coulisser le noyau.

En configuration verticale, une vanne multivoies selon l'invention permet la circulation en convection naturelle d'un fluide à travers une zone à alimenter depuis le canal inférieur du noyau jusqu'au canal supérieur du noyau en passant par l'un des orifices principaux du corps agencé en bas puis par un autre des orifices principaux du corps agencé en haut.

Cela est avantageux, en particulier lorsque la vanne multivoies est immergée, comme dans une cuve de réacteur nucléaire, puisque cela permet d'interrompre toutes les pompes d'alimentation du circuit et de procéder à une mise en place/retrait d'une enceinte à alimenter, comme celle d'un cible à irradier. Selon un mode de réalisation avantageux, la vanne comporte en outre un moyen de rappel pour déplacer et maintenir le noyau de sa première position à sa deuxième position de coulissement. De préférence, le moyen de rappel est un ressort, de préférence encore un ressort de compression.

Selon une variante avantageuse, la vanne comporte en outre des flasques amovibles agencées chacune en regard de l'une des extrémités axiales du noyau et adaptées pour contenir le noyau entre sa première et sa deuxième position de coulissement et vice-versa.

Selon une autre variante avantageuse, le noyau comporte en outre un moyen d'accrochage adapté pour coopérer avec un moyen d'accrochage complémentaire d'une des flasques,
vanne dans laquelle le noyau est en outre monté rotatif dans l'alésage central du corps de telle sorte que :
- dans une première position de rotation, le moyen d'accrochage du noyau coopère avec le moyen d'accrochage complémentaire de la flasque, afin de maintenir le ressort dans sa position comprimée;
- dans une deuxième position de rotation, le moyen d'accrochage du noyau se libère du moyen d'accrochage complémentaire de la flasque, afin de libérer le ressort et permettre ainsi au noyau de coulisser depuis sa première position de coulissement à sa deuxième position de coulissement.

De préférence, le noyau comporte une tête agencée à l'extérieur d'une des flasques et adaptée pour être manipulée en rotation entre la première position de rotation et la deuxième position de rotation du noyau et vice-versa, afin d'accrocher le noyau ou libérer le ressort.

Selon une variante de réalisation du corps, celui-ci comporte en outre un premier canal reliant l'alésage central à l'extérieur et un deuxième canal reliant l'alésage central à l'extérieur, les zones dans lesquelles le premier et le deuxième canal débouchent dans l'alésage central étant en regard du premier rétrécissement du noyau dans sa deuxième position de coulissement.

De préférence, la vanne comporte un premier clapet anti-retour monté dans l'un des orifices principaux.

Selon un mode de réalisation avantageux, le corps comporte en outre :
- un troisième canal reliant l'alésage central à l'orifice principal dans lequel est monté le premier clapet anti-retour;
- un deuxième clapet anti-retour monté dans le troisième canal, le deuxième clapet anti-retour étant taré pour s'ouvrir lorsque le premier clapet anti-retour se ferme en dessous d'une pression prédéterminée d'un fluide l'alimentant.

Avantageusement, les rétrécissements du noyau ont un profil en forme de tore.

L'invention a également pour objet selon un autre de ses aspects, un système de circulation de fluides d'une enceinte immergée, comprenant :
- au moins une vanne décrite précédemment, agencée à la verticale,
- au moins une ligne d'alimentation en fluide en communication fluidique avec l'un des orifices principaux de la vanne,
- au moins une ligne de récupération en fluide en communication fluidique avec un autre des orifices principaux de la vanne, situé du même côté que celui en communication fluidique avec la ligne d'alimentation en fluide,
- au moins une enceinte comportant :
   - un orifice d'amenée du fluide en communication fluidique avec l'autre des orifices principaux de la vanne, situé en regard de l'orifice en communication fluidique avec la ligne d'alimentation en fluide,
   - un orifice de récupération du fluide en communication fluidique avec l'autre des orifices principaux de la vanne, situé en regard de l'orifice en communication fluidique avec la ligne de récupération en fluide.

Selon un mode de réalisation avantageux du système, il comporte un bâti fixe avec une plaque comportant au moins une rainure de blocage adaptée pour loger une partie du noyau de la vanne et une butée fixe, la vanne étant adaptée pour être déplacée d'une première position inactive dans laquelle une partie du noyau en saillie par rapport du corps ou le cas échéant d'un flasque est en butée latéralement à l'axe du corps de vanne contre la butée, à une deuxième position active dans laquelle une partie du noyau vient se loger dans la rainure afin de bloquer le noyau dans sa première position de coulissement.

Selon une application préférée, l'enceinte est en communication fluidique avec une cible à irradier au sein d'une cuve de réacteur nucléaire, le système constituant un système de circulation d'un fluide caloporteur à l'intérieur de la cible.

L'invention a enfin pour objet, selon un autre de ses aspects, un procédé de fonctionnement du système décrit ci-avant, comportant les étapes suivantes :
a/ en cas d'irradiation de la cible, mise en position du noyau de la vanne dans sa première position de coulissement, alimentation en fluide caloporteur de l'intérieur de l'enceinte respectivement par la ligne d'alimentation, deux des orifices principaux en regard l'un de l'autre en passant par le rétrécissement du noyau et récupération du fluide caloporteur depuis l'intérieur de l'enceinte respectivement par les deux autres orifices principaux en regard l'un de l'autre en passant par le rétrécissement du noyau;
b/ en cas de déchargement/chargement de la cible, mise en position du noyau de la vanne dans sa deuxième position de coulissement, alimentation en fluide depuis l'intérieur de la cuve, de l'intérieur de l'enceinte respectivement par l'un des canaux du noyau et l'un des deux orifices principaux et récupération du fluide depuis l'intérieur de l'enceinte respectivement par l'un des deux autres orifices principaux et par l'autre canal du noyau vers l'intérieur de la cuve.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- les figures 1A et 1B sont des vues en coupe longitudinale d'une vanne multivoies selon l'invention, respectivement dans une première position de coulissement du noyau dans laquelle les orifices principaux du corps sont mis en communication entre eux et dans une deuxième position de coulissement du noyau, de mise en communication d'une partie seulement des orifices principaux du corps avec les canaux du noyau, l'autre partie des orifices principaux étant obturée par le noyau,
- les figures 2A et 2B sont des vues schématiques, similaires des figures 1A et 1B, mais montrant la vanne telle qu'elle est installée dans un dispositif d'irradiation d'une cible dans une cuve de réacteur nucléaire de recherche;
- la figure 3 est une vue en perspective d'une vanne multivoies selon l'invention;
- la figure 4 est une vue en coupe longitudinale du corps de la vanne de la figure 3;
- la figure 5 est une vue en perspective du noyau de la vanne de la figure 3;
- la figure 5A est une vue en coupe longitudinale du noyau selon la figure 5;
- les figures 6A et 6B sont des vues en perspective et en coupe longitudinale partielle d'une vanne de la figure 3, respectivement dans la première position de coulissement et la deuxième position de coulissement du noyau;
- les figures 7A et 7B sont des vues en perspective similaires aux figures 6A et 6B ;

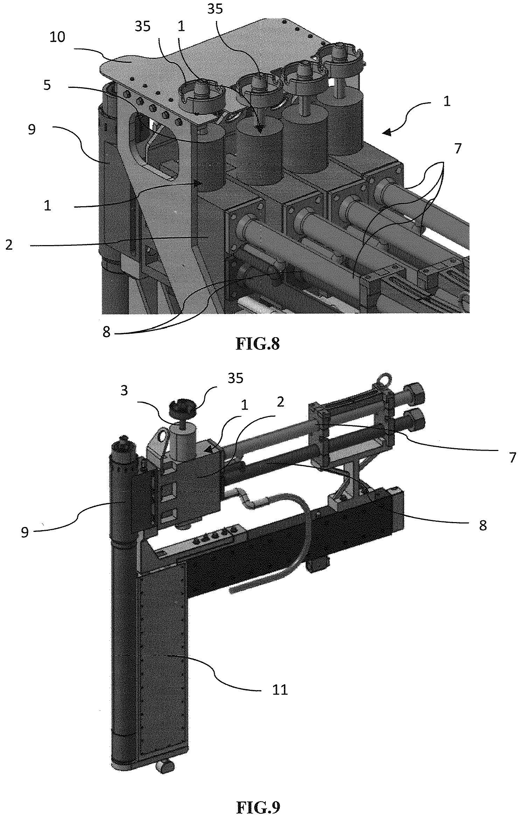

- les figures 8 est une vue en perspective montrant une partie d'un bâti adapté pour bloquer en translation le noyau de la vanne selon l'invention empêchant un fonctionnement indésirable du noyau, en particulier en configuration d'irradiation d'une cible alimentée en fluide caloporteur par la vanne ;
- la figure 9 est une vue en perspective montrant un dispositif d'irradiation d'une cible dans une cuve de réacteur nucléaire de recherche, dans lequel est installée une vanne multivoies selon l'invention ;
- la figure 10 est une vue en coupe longitudinale et en perspective d'une partie du dispositif selon la figure 9 montrant l'intérieur de la vanne multivoies selon l'invention et ses connexions fluidiques avec les lignes d'alimentation et évacuation du fluide caloporteur et avec l'enceinte d'alimentation de la cible à irradier ;
- les figures 11A et 11B sont des vues en coupe longitudinale, similaire à la figure 10, avec la vanne multivoies selon l'invention respectivement dans la première et dans la deuxième position de coulissement du noyau;
- la figure 12 est une vue en coupe longitudinale similaire à la figure 11B, mais montrant en détail la circulation des fluides ;
- la figure 12A est une vue en coupe transversale du dispositif d'irradiation avec la vanne selon la figure 12, montrant en détail la circulation en retour du fluide caloporteur à l'intérieur de la vanne ;
- les figures 13A et 13B sont des vues en coupe d'une vanne multivoies selon un mode de réalisation avantageux, respectivement en configuration d'alimentation du circuit principal de fluide caloporteur et en configuration d'alimentation du circuit de secours du fluide caloporteur ;
- les figures 14 et 15 sont des vues de côté d'un dispositif d'irradiation d'une cible nucléaire, dans lequel est installée une vanne multivoies selon l'invention et tel que monté sur un système de déplacement, respectivement en position reculée correspondant à une position de chargement/déchargement de la cible et en position avancée correspondant à une position d'irradiation de la cible;
- les figures 14A et 15A sont des vues de dessus dans les mêmes positions relatives que celles des figures 14 et 15 ;
- la figure 14B est une vue de détail et en coupe de la vanne multivoies selon l'invention lorsque le dispositif d'irradiation est en position reculée correspondant à une position de chargement/déchargement de la cible.

On précise que sur les différentes figures, les flèches symbolisées représentent le sens d'un fluide.

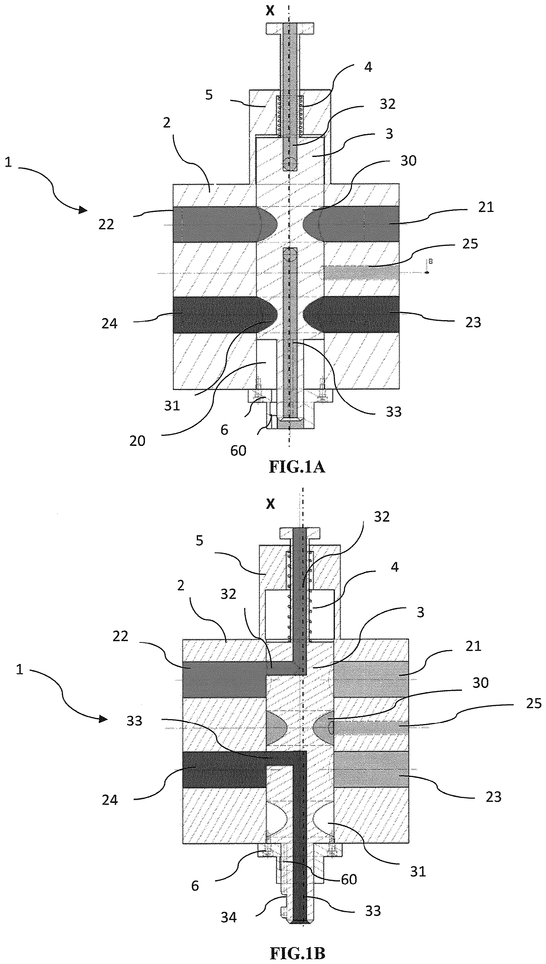

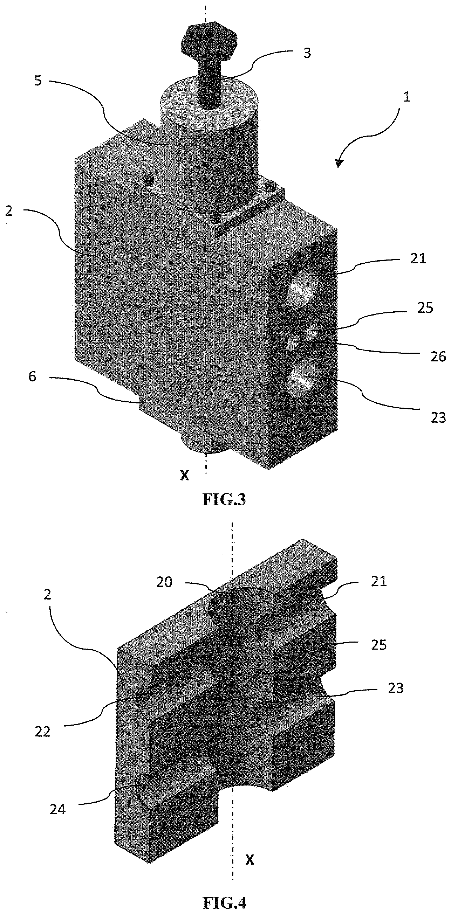

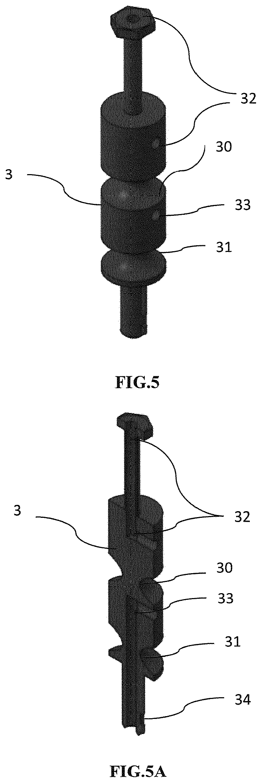

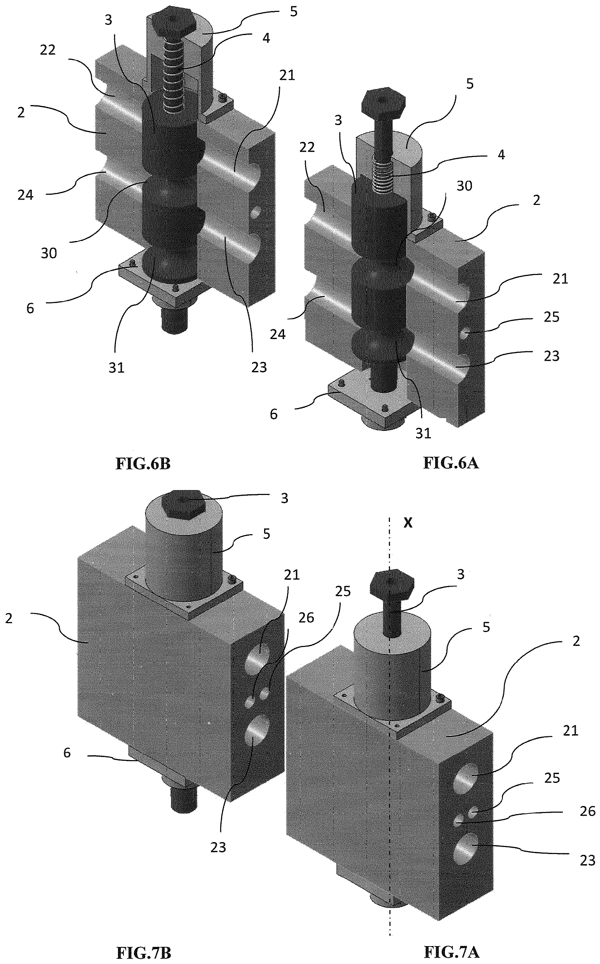

On a représenté aux différentes figures 1 à 7B, une vanne 1 multivoies de type à boisseau coulissant, conforme à l'invention.

Cette vanne 1 comporte tout d'abord un corps 2 s'étendant selon un axe central (X) qui est percé d'un alésage central 20, débouchant de part et d'autre du corps. Il comporte en outre quatre orifices principaux 21, 22, 23, 24, agencés deux à deux de part et d'autre de l'axe central (X). Chacun de ces orifices principaux débouche d'une part sur l'extérieur du corps et d'autre part sur l'alésage central 20 en étant en regard d'un autre des orifices principaux. Plus précisément, l'orifice 21 est en regard de l'orifice 22 et l'orifice 23 est en regard de l'orifice 24. Le corps 2 est de préférence en métal, typiquement en aluminium.

La vanne 1 comporte également un noyau 3 de forme générale cylindrique, comportant deux rétrécissements 30, 31, de préférence en profil en forme de tore, de diamètre distants l'un de l'autre d'une distance correspondant à l'entre-axes entre deux orifices centraux 21, 22 ; 23, 24 du corps. Plus précisément, la distance entre les deux rétrécissements 30 et 31 est égale à l'entre-axe séparant les deux orifices 21 et 23, elle-même égale à l'entre-axe entre les orifices 22 et 24. Le noyau 3 est de préférence en métal, typiquement en aluminium, par exemple un aluminium 6061 ou en acier inoxydable, par exemple un acier 316L.

Le noyau 3 est en outre percé de deux canaux 32, 33. Le canal 33 est débouchant d'une part sur une des extrémités axiales du noyau et d'autre part sur sa périphérie radiale entre les deux rétrécissements 30, 31. Le canal 32 est quant à lui débouchant d'une part sur l'autre des extrémités axiales du noyau et d'autre part sur sa périphérie radiale entre le rétrécissement 30 et l'autre des extrémités axiales du noyau 3.

Bien que non représenté, on agence tous moyens connus d'étanchéité, tels que des joints ou des soufflets autour du noyau pour réaliser l'étanchéité aux fluides depuis l'extérieur vers l'alésage central 20.

Selon un mode de réalisation avantageux, la vanne 1 comporte également un ressort de rappel 4 pour déplacer le noyau 3 de sa première position (figures 1A, 2A, 6A, 7A) à sa deuxième position de coulissement (figures 1B, 2B, 6B, 7B) et le maintenir. Dans le mode illustré, le ressort 4 est un ressort de compression. La fonction du ressort sera détaillée ci-après.

Selon une variante avantageuse, la vanne 1 comporte en outre deux flasques amovibles 5, 6 agencées chacune en regard de l'une des extrémités axiales du noyau et adaptées pour contenir le noyau 3 entre sa première et sa deuxième position de coulissement et vice-versa. Ces flasques amovibles peuvent être en acier inoxydable et leur amovibilité permet de changer aisément le noyau 3 et/ou le ressort de rappel 4 sans avoir à remplacer toute une vanne en cas de défaillance mécanique.

Egalement selon une variante avantageuse, le noyau 3 comporte en outre une gorge 34 adaptée pour s'accrocher sur un épaulement 60 complémentaire d'une des flasques 6.

Le noyau 3 peut comporter une tête 35 agencée à l'extérieur d'une des flasques 5.

On décrit maintenant le fonctionnement d'une vanne multivoies selon l'invention en référence aux figures 1A, 1B, 6A, 6B et 7A, 7B, sans détailler sa mise en oeuvre dans une application particulière.

Le noyau 3 est monté au moins coulissant dans l'alésage central 20 du corps 2. Ce montage coulissant est réalisé de telle sorte que :
- dans une première position de coulissement, les orifices principaux en regard l'un de l'autre sont en communication fluidique deux-à-deux 21, 22 ; 23, 24 au moyen d'un des rétrécissements 30, 31 tandis que les deux canaux 32, 33 ne débouchent pas dans les orifices principaux (figures 1A, 6B, 7B);
- dans une deuxième position de coulissement, les deux canaux 32, 33 débouchent chacun dans l'un des deux des orifices principaux 22, 24 situés du même côté de l'axe central du corps tandis qu'aucun des orifices principaux 21 à 24 n'est en communication fluidique avec un autre des orifices principaux (figures 1B, 6A, 7A).

Plus précisément, dans la première position de coulissement du noyau, l'orifice 21 est en communication avec l'orifice 22 par l'intermédiaire du rétrécissement 30 du noyau 3, tandis que l'orifice 23 est en communication avec l'orifice 24 par l'intermédiaire du rétrécissement 31 (figures 1A, 6B, 7B).

Dans la deuxième position de coulissement, le canal 32 est en communication avec l'orifice 22 et le canal 33 est en communication avec l'orifice 24 (figures 1B, 6A, 7A). Dans cette deuxième position, qui est la position basse du noyau 3 lorsque la vanne 1 est agencée à la verticale avec l'orifice 33 débouchant vers le bas, on peut obtenir une convection naturelle d'un fluide provenant de l'extérieur depuis le canal 33 jusqu'en sortie du canal 32 en passant par les orifices 24 et 22 respectivement.

Pour obtenir le déplacement du noyau 3 uniquement avec l'action du ressort de rappel 4, le noyau est avantageusement monté rotatif dans l'alésage central 20 du corps de telle sorte que :
- dans une première position de rotation, la gorge 34 coopère avec l'épaulement 60 complémentaire, ce qui maintient le ressort 4 dans sa position comprimée;
- dans une deuxième position de rotation, la gorge 34 se libère de l'épaulement 60, ce qui libère le ressort 4, qui se détend et provoque ainsi le coulissement du noyau depuis sa première position de coulissement à sa deuxième position de coulissement. La course angulaire entre la première et la deuxième position de rotation du noyau peut être de l'ordre de 90° (quart de tour).

La tête 35 prévue permet une manipulation en rotation depuis l'extérieur entre la première position de rotation et la deuxième position de rotation du noyau 3 et vice-versa, afin d'accrocher le noyau ou libérer le ressort 4. Un opérateur peut ainsi faire une manipulation aisée du noyau, en particulier à l'aveugle, par exemple au moyen d'une perche de manutention.

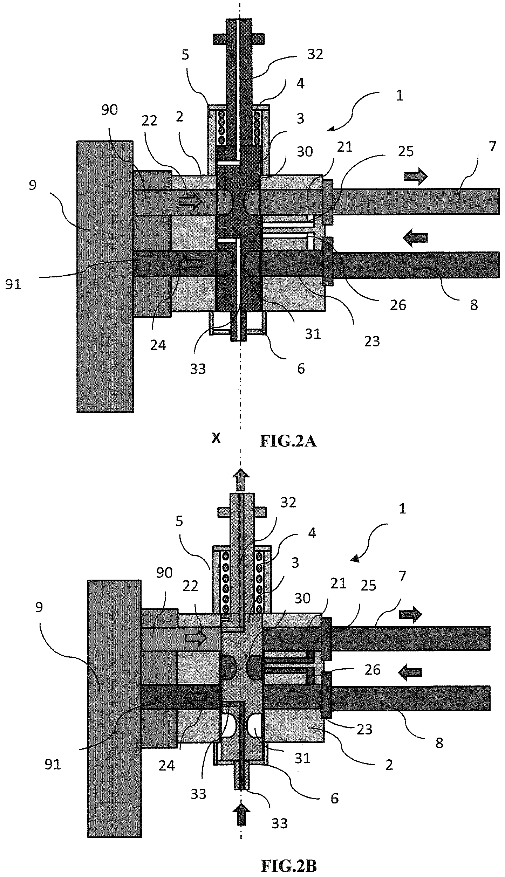

Selon une variante avantageuse, le noyau 3 comporte en outre un canal 25 reliant l'alésage central 20 à l'extérieur du corps 2 et un deuxième canal 26 reliant l'alésage central 20 à l'extérieur du corps 2. Les zones dans lesquelles les canaux 25, 26 débouchent dans l'alésage centrale 20 sont en regard du premier rétrécissement 30 du noyau 3 dans sa deuxième position de coulissement. Les canaux 25, 26 peuvent être rectilignes et déboucher directement à l'extérieur du corps 2 de vanne (figures 1A, 1B, 3, 4, 6A, 6B, 7A, 7B) ou être coudés et déboucher chacun sur l'un des orifices principaux 21, 23 (figures 2A, 2B).

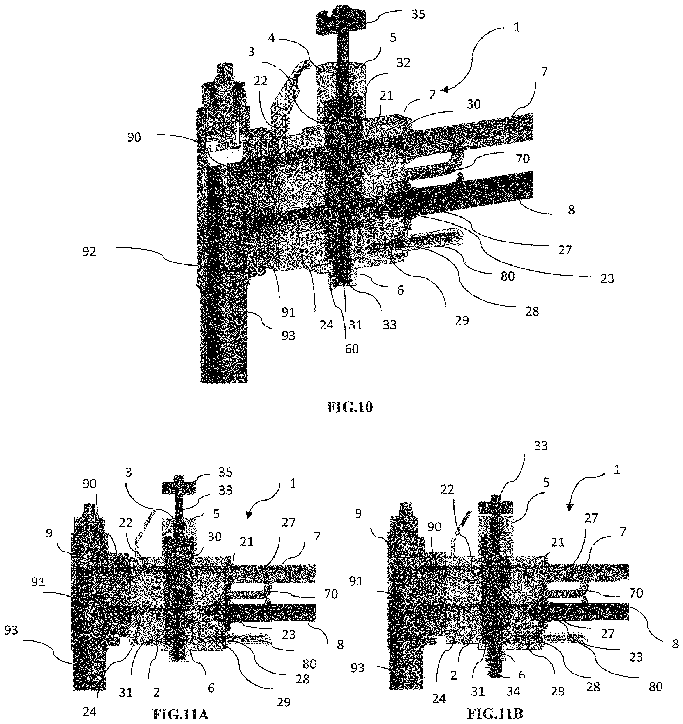

Les figures 2A, 2B, 10, 11A, 11B, 12, 12A, 13A et 13B montrent l'implantation d'une vanne multivoies 1 selon l'invention dans un dispositif d'irradiation d'une cible dans une cuve de réacteur nucléaire de recherche.

La vanne 1 est agencée à la verticale est immergée avec le dispositif dans la cuve.

Tel qu'illustré, l'orifice 23 est celui d'alimentation et il est ainsi connecté à une ligne d'alimentation en fluide caloporteur 8.

L'orifice 21 est celui d'évacuation et ainsi connecté à une ligne d'évacuation du fluide caloporteur ayant circulé sur la cible à irradier.

Le dispositif d'irradiation comporte par ailleurs au moins une enceinte 9 au sein de laquelle est logée une cible 11 à irradier.

L'enceinte comporte un orifice 91 qui est celui d'amenée d'un fluide caloporteur connecté à l'orifice 24 et un orifice 90 qui est celui de récupération du fluide caloporteur ayant circulé sur la cible, connecté à l'orifice 22.

Ainsi, en position d'irradiation d'une cible 11 à irradier, le noyau 3 est en position haute et permet le passage intégral du fluide caloporteur depuis la ligne 8 vers l'orifice 91 en passant par le rétrécissement 31 (figures 2A, 10, 11A, 13A): le fluide caloporteur peut ainsi venir refroidir la cible lors de l'irradiation. Les canaux 32, 33 sont obturées par le noyau 3, le corps 2 ou les flasques 5, 6.

Dans cette position, le fluide caloporteur ayant circulé sur la cible ressort par l'orifice 90 puis par les orifices 22 et 21 et la ligne d'évacuation 7 (figure 2A, 10, 11A, 13A).

En position de chargement ou de déchargement d'une cible 11, un opérateur peut à l'aide d'une perche de manutention venir mettre en rotation la tête 35 du noyau 3.

Le noyau 3 vient alors en position basse du fait de la libération de l'accrochage de l'encoche 34 de l'épaulement 60. Le ressort de rappel 4 initialement comprimé, se détend et favorise donc le coulissement du noyau 3 vers le bas. En position basse, le noyau 3 permet de mettre en communication fluidique immédiatement l'enceinte 9 et donc la cible avec l'eau de la cuve (piscine) (figures 2B, 11B, 12, 12A). En effet, la différence d'altitude entre l'entrée de l'eau de la piscine par le canal 33 et la sortie par le canal 32 permet la mise en place d'une convection naturelle. L'eau de piscine entre ainsi par convection naturelle depuis le canal 33 du noyau 3, l'orifice 24 du corps et celui 91 de l'enceinte 9, puis sort par l'orifice 90 de l'enceinte 9, l'orifice 22 du corps 2 et le canal 32 du noyau 3 (figures 2B, 11B, 12, 12A).).

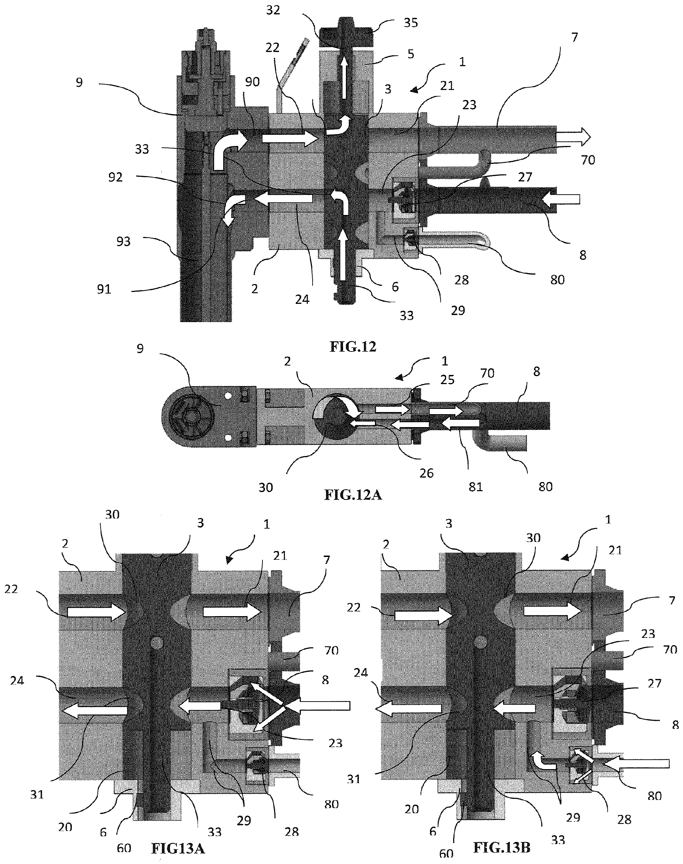

Les canaux 25, 26 permettent en outre de réaliser un système de by-pass du fluide caloporteur provenant de la ligne d'alimentation 8. Ainsi, comme cela est montré en détail en figure 12A, le fluide caloporteur provenant de la ligne d'alimentation 8 passe dans le canal 26 puis est refoulé en retour dans le rétrécissement 30 vers le canal 25 et donc dans la ligne d'évacuation 7. Cette variante permet avantageusement de réduire l'impact du changement de position de la vanne 1 sur le reste de l'installation, c'est-à-dire de réduire les ondes de pression néfastes susceptibles de se produire lors d'une fermeture brutale d'une vanne. On améliore ainsi la stabilité thermo-hydraulique des autres circuits non fermés.

Dans un mode de réalisation avantageux illustré aux figures 13A et 13B, la vanne 1 comporte un premier clapet anti-retour 27 monté dans l'orifice principal 23 du corps 2. Le corps 2 comporte un autre canal 29 reliant l'alésage central 20 à cet orifice 23 principal. Un deuxième clapet anti-retour 28 est monté dans le canal 29.

Selon ce mode, le deuxième clapet anti-retour 28 est taré pour s'ouvrir lorsque le premier clapet anti-retour 27 se ferme en dessous d'une pression prédéterminée d'un fluide l'alimentant.

Ainsi, en fonctionnement normal, c'est-à-dire avec une alimentation sous pression nominale du fluide caloporteur dans la boucle de circuit comprenant les lignes 7 et 8, la pression du fluide caloporteur permet de maintenir ouvert le clapet anti-retour 27. Simultanément, le fluide entre dans le canal 29, et donc sa pression nominale maintient le clapet anti-retour 28 fermé et alimente l'enceinte 9 en ressort et retourne par la ligne 7, comme déjà détaillé (figure 13A).

En cas de fonctionnement anormal, notamment en cas de rupture sur une des lignes 7 ou 8, la pression du fluide caloporteur va alors chuter et le clapet anti-retour 27 va donc se fermer. La pression dans le canal 29 devenant alors plus faible, le clapet anti-retour 28 va donc à contrario s'ouvrir du fait de la pression d'alimentation de pompes de secours qui amène le fluide par l'orifice 80 (figure 13B). On peut ainsi maintenir une alimentation en fluide caloporteur de l'enceinte 9 et donc de la cible 11 à irradier par la même vanne 1 en cas de situation de fonctionnement anormal.

Comme expliqué ci-après, lorsqu'une vanne 1 selon l'invention est installée dans un dispositif d'irradiation d'une cible nucléaire, il est nécessaire de mettre en oeuvre des dispositions supplémentaires pour éviter de façon sûre, d'un point de vue mécaniquement, des situations accidentelles inacceptables.

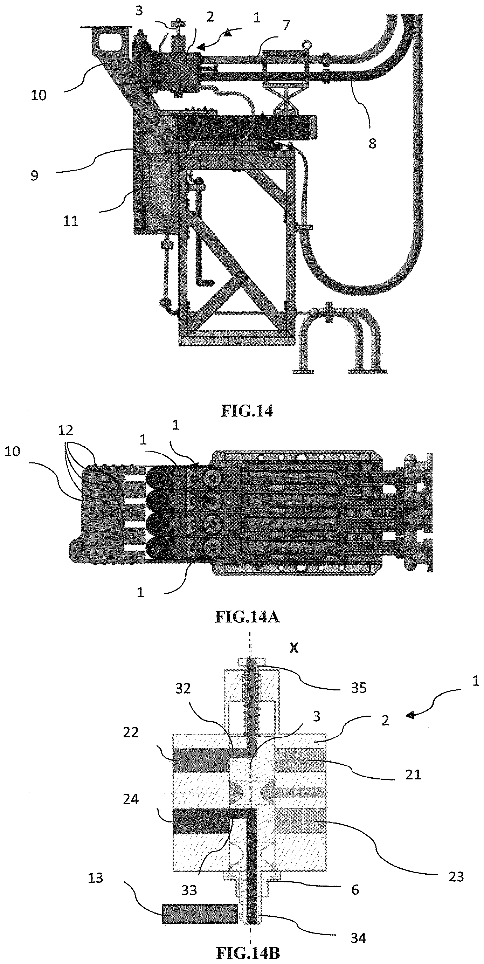

Ainsi, la forme adaptée de la tête 35 du noyau de vanne 1 procure un avantage de sécurité de fonctionnement, comme montré aux figures 14 à 15A et expliqué ci-après.

Un système de déplacement peut déplacer en translation le système de refroidissement d'une cible 11 à irradier avec une ou plusieurs vannes 1 par rapport à un bâti fixe 10.

Le bâti 10 est muni d'une une plaque comportant une ou plusieurs rainures 12.

Chaque rainure 12 permet de loger une partie du noyau 3 d'une vanne 1 avec la tête 35 au-dessus.

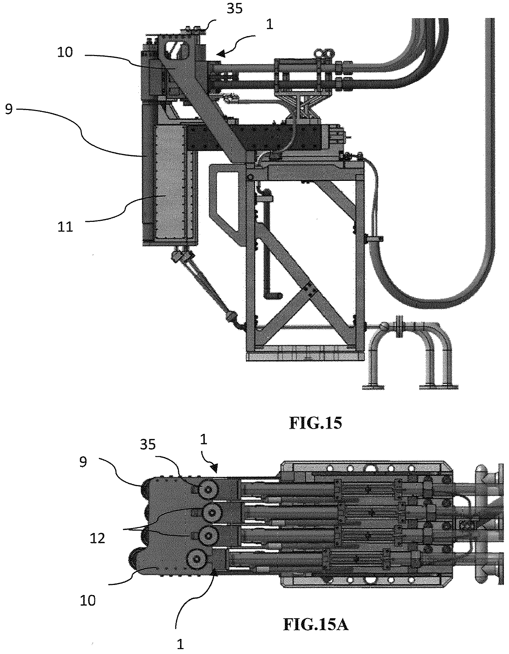

Le système de déplacement peut déplacer le dispositif d'irradiation avec l'enceinte 9 et la cible 11, et les vannes 1 d'une position reculée correspondant à une position de chargement/déchargement d'une cible 11, dans laquelle le noyau 3 de chaque vanne est bloqué en translation par la mise en butée de son extrémité au niveau de la gorge 34 contre une butée 13 (figures 14, 14A et 14B), à une position avancée correspondant à une position d'irradiation de la cible 11 dans laquelle la partie du noyau d'une vanne 1 vient se loger dans la rainure 12 et la tête 35 vient bloquer le noyau 3 dans sa première position de coulissement (figures 15 et 15A).

Ainsi, quand le dispositif d'irradiation est dans sa position avancée, on interdit toute passage en position basse du noyau 3 en le bloquant le par l'intermédiaire de la tête 35 dans la rainure 12 du bâti fixe 10.

A contrario, quand le dispositif d'irradiation est dans sa position reculée avec le noyau 3 en position basse on interdit toute avance du dispositif. En effet, le bas du noyau 3 dépasse au niveau de la gorge 34 le capot 6 et vient en interférence mécanique avec la butée 13. Cette butée 13 peut être avantageusement un seul élément formant une ceinture de protection qui traverse l'ensemble des quatre dispositifs montrés en figures 14 et 14A. Ainsi, pour provoquer à nouveau une avance d'un dispositif d'irradiation, un opérateur doit impérativement faire revenir le noyau 3 dans sa position haute pour supprimer l'interférence mécanique avec la butée 13, c'est-à-dire faire passer le bas du noyau au niveau de la gorge 34 au-dessus de la butée 13. Ainsi, on met en oeuvre de manière simple et fiable avec deux moyens mécaniques supplémentaires 12, 13, des verrouillages mécaniques avec le noyau 3 de la vanne 1, qui permettent d'interdire des situations critiques.

L'invention n'est pas limitée aux exemples qui viennent d'être décrits; on peut notamment combiner entre elles des caractéristiques des exemples illustrés au sein de variantes non illustrées.

## Revendications

1. Vanne (1) multivoies, de type à boisseau coulissant comportant :
- un corps (2) s'étendant selon un axe central (X) et percé d'un alésage central (20), débouchant de part et d'autre du corps; et d'au moins quatre orifices principaux (21, 22, 23, 24), agencés deux à deux de part et d'autre de l'axe central (X), chacun des orifices principaux débouchant d'une part sur l'extérieur du corps et d'autre part sur l'alésage central en étant en regard d'un autre des orifices principaux ;
- un noyau (3) de forme générale cylindrique, comportant deux rétrécissements (30, 31) de diamètre distants l'un de l'autre d'une distance correspondant à l'entre-axes entre deux orifices principaux (21, 22 ; 23, 24) du corps, le noyau étant percé de deux canaux (32, 33) dont l'un (33) est débouchant d'une part sur une des extrémités axiales du noyau et d'autre part sur sa périphérie radiale entre les deux rétrécissements (30, 31), et dont l'autre (32) est débouchant d'une part sur l'autre des extrémités axiales du noyau et d'autre part sur sa périphérie radiale entre l'un (30) des deux rétrécissements et l'autre des extrémités axiales du noyau,
vanne dans laquelle le noyau est monté au moins coulissant dans l'alésage central du corps de telle sorte que :
• dans une première position de coulissement, les orifices principaux en regard l'un de l'autre sont en communication fluidique deux-à-deux (21, 22 ; 23, 24) au moyen d'un des rétrécissements (30, 31) tandis que les deux canaux (32, 33) ne débouchent pas dans les orifices principaux ;
• dans une deuxième position de coulissement, les deux canaux (32, 33) débouchent chacun dans l'un des deux des orifices principaux (22, 24) situés du même côté de l'axe central du corps tandis qu'aucun des orifices principaux (21 à 24) n'est en communication fluidique avec un autre des orifices principaux.

2. Vanne (1) multivoies selon la revendication 1, comportant en outre un moyen de rappel (4) pour déplacer et maintenir le noyau de sa première position à sa deuxième position de coulissement.

3. Vanne (1) multivoies selon la revendication 2, le moyen de rappel (4) étant un ressort.

4. Vanne (1) multivoies selon la revendication 3, le ressort (4) étant un ressort de compression.

5. Vanne (1) multivoies selon l'une des revendications 1 à 3, comportant en outre des flasques amovibles (5, 6) agencées chacune en regard de l'une des extrémités axiales du noyau et adaptées pour contenir le noyau entre sa première et sa deuxième position de coulissement et vice-versa.

6. Vanne (1) multivoies selon la revendication 2 à 4 en combinaison avec la revendication 5, le noyau comportant en outre un moyen d'accrochage (34) adapté pour coopérer avec un moyen d'accrochage (60) complémentaire d'une des flasques (6),
vanne dans laquelle le noyau est en outre monté rotatif dans l'alésage central du corps de telle sorte que :
• dans une première position de rotation, le moyen d'accrochage (34) du noyau coopère avec le moyen d'accrochage (60) complémentaire de la flasque (6), afin de maintenir le ressort (4) dans sa position comprimée;
• dans une deuxième position de rotation, le moyen d'accrochage (34) du noyau se libère du moyen d'accrochage (60) complémentaire de la flasque (6), afin de libérer le ressort (4) et permettre ainsi au noyau de coulisser depuis sa première position de coulissement à sa deuxième position de coulissement.

7. Vanne (1) multivoies selon la revendication 6, le noyau comportant une tête (35) agencée à l'extérieur d'une des flasques (5) et adaptée pour être manipulée en rotation entre la première position de rotation et la deuxième position de rotation du noyau et vice-versa, afin d'accrocher le noyau ou libérer le ressort.

8. Vanne (1) multivoies selon l'une des revendications précédentes, le corps comportant en outre un premier canal (25) reliant l'alésage central (20) à l'extérieur et un deuxième canal (26) reliant l'alésage central (20) à l'extérieur, les zones dans lesquelles le premier et le deuxième canal débouchent dans l'alésage central (20) étant en regard du premier rétrécissement (30) du noyau (3) dans sa deuxième position de coulissement.

9. Vanne (1) multivoies selon l'une des revendications précédentes, comportant un premier clapet anti-retour (27) monté dans l'un des orifices (23) principaux.

10. Vanne (1) multivoies selon la revendication 9, le corps comportant en outre :
- un troisième canal (29) reliant l'alésage central (20) à l'orifice (23) principal dans lequel est monté le premier clapet anti-retour (27) ;
- un deuxième clapet anti-retour (28) monté dans le troisième canal, le deuxième clapet anti-retour étant taré pour s'ouvrir lorsque le premier clapet anti-retour se ferme en dessous d'une pression prédéterminée d'un fluide l'alimentant.

11. Vanne (1) multivoies selon l'une des revendications précédentes, les rétrécissements (30, 31) du noyau ayant un profil en forme de tore.

12. Système de circulation de fluides d'une enceinte immergée, comprenant :
- au moins une vanne (1) selon l'une des revendications précédentes, agencée à la verticale,
- au moins une ligne d'alimentation en fluide (8) en communication fluidique avec l'un des orifices principaux (23) de la vanne,
- au moins une ligne de récupération en fluide (7) en communication fluidique avec un autre des orifices principaux (21) de la vanne, situé du même côté que celui (23) en communication fluidique avec la ligne d'alimentation en fluide,
- au moins une enceinte (9) comportant :
• un orifice (91) d'amenée du fluide en communication fluidique avec l'autre des orifices principaux (24) de la vanne, situé en regard de l'orifice (23) en communication fluidique avec la ligne d'alimentation en fluide,
• un orifice (90) de récupération du fluide en communication fluidique avec l'autre des orifices principaux (22) de la vanne, situé en regard de l'orifice (21) en communication fluidique avec la ligne de récupération en fluide.

13. Système selon la revendication précédente, comportant un bâti fixe (10) avec une plaque comportant au moins une rainure (12) de blocage adaptée pour loger une partie du noyau (3) de la vanne et une butée fixe (13), la vanne (1) étant adaptée pour être déplacée d'une première position inactive dans laquelle une partie du noyau en saillie par rapport du corps (2) ou le cas échéant d'un flasque (6) est en butée latéralement à l'axe (X) du corps de vanne contre la butée (13), à une deuxième position active dans laquelle une partie du noyau vient se loger dans la rainure (13) afin de bloquer le noyau dans sa première position de coulissement.

14. Système selon l'une des revendications 12 ou 13, l'enceinte étant en communication fluidique avec une cible (11) à irradier au sein d'une cuve de réacteur nucléaire, le système constituant un système de circulation d'un fluide caloporteur à l'intérieur de la cible.

15. Procédé de fonctionnement du système selon la revendication 14, comportant les étapes suivantes :
a/ en cas d'irradiation de la cible (11), mise en position du noyau de la vanne dans sa première position de coulissement, alimentation en fluide caloporteur de l'intérieur de l'enceinte (9, 91, 92) respectivement par la ligne d'alimentation (8), deux des orifices principaux (23, 24) en regard l'un de l'autre en passant par le rétrécissement (31) du noyau et récupération du fluide caloporteur depuis l'intérieur de l'enceinte (9, 93, 90) respectivement par les deux autres orifices principaux (22, 21) en regard l'un de l'autre en passant par le rétrécissement (30) du noyau;
b/ en cas de déchargement/chargement de la cible (11), mise en position du noyau de la vanne dans sa deuxième position de coulissement, alimentation en fluide depuis l'intérieur de la cuve, de l'intérieur de l'enceinte (9, 91, 92) respectivement par l'un des canaux (33) du noyau et l'un des deux orifices principaux (24) et récupération du fluide depuis l'intérieur de l'enceinte (9, 93, 90) respectivement par l'un des deux autres orifices principaux (22) et par l'autre canal (32) du noyau vers l'intérieur de la cuve.

## Patentansprüche

1. Mehrwegeventil (1), von der Art mit gleitendem Ventileinsatz, das aufweist:
- einen Körper (2), der sich gemäß einer Mittelachse (X) erstreckt und der von einer mittleren Bohrung (20), die zu beiden Seiten des Körpers mündet, und von mindestens vier Hauptöffnungen (21, 22, 23, 24) durchbohrt wird, die paarweise zu beiden Seiten der Mittelachse (X) angeordnet sind, wobei jede der Hauptöffnungen einerseits an der Außenseite des Körpers und andererseits an der mittleren Bohrung mündet, indem sie einer anderen der Hauptöffnungen gegenüberliegt;
- einen Kern (3) von allgemein zylindrischer Form, der zwei Durchmesserverengungen (30, 31) aufweist, die einen Abstand voneinander haben, der dem Achsabstand zwischen zwei Hauptöffnungen (21, 22; 23, 24) des Körpers entspricht, wobei der Kern von zwei Kanälen (32, 33) durchbohrt wird, von denen der eine (33) einerseits an einem der axialen Enden des Kerns und andererseits an seinem radialen Umfang zwischen den zwei Verengungen (30, 31) mündet, und von denen der andere (32) einerseits an dem anderen der axialen Enden des Kerns und andererseits an seinem radialen Umfang zwischen der einen (30) der zwei Verengungen und dem anderen der axialen Enden des Kerns mündet,
Ventil, bei dem der Kern mindestens in der mittleren Bohrung des Körpers gleitend montiert ist, so dass:
• in einer ersten Gleitstellung die einander gegenüberliegenden Hauptöffnungen paarweise (21, 22; 23, 24) mittels einer der Verengungen (30, 31) in Fluidverbindung sind, während die zwei Kanäle (32, 33) nicht in die Hauptöffnungen münden;
• in einer zweiten Gleitstellung die zwei Kanäle (32, 33) je in eine der zwei Hauptöffnungen (22, 24) münden, die sich auf der gleichen Seite der Mittelachse des Körpers befinden, während keine der Hauptöffnungen (21 bis 24) mit einer anderen der Hauptöffnungen in Fluidverbindung steht.

2. Mehrwegeventil (1) nach Anspruch 1, das außerdem eine Rückstelleinrichtung (4) aufweist, um den Kern von seiner ersten Stellung in seine zweite Gleitstellung zu verschieben und zu halten.

3. Mehrwegeventil (1) nach Anspruch 2, wobei die Rückstelleinrichtung (4) eine Feder ist.

4. Mehrwegeventil (1) nach Anspruch 3, wobei die Feder (4) eine Druckfeder ist.

5. Mehrwegeventil (1) nach einem der Ansprüche 1 bis 3, das außerdem entfernbare Flansche (5, 6) aufweist, die je vor einem der axialen Enden des Kerns angeordnet und geeignet sind, den Kern zwischen seiner ersten und seiner zweiten Gleitstellung und umgekehrt zu enthalten.

6. Mehrwegeventil (1) nach Anspruch 2 bis 4 in Kombination mit Anspruch 5, wobei der Kern außerdem eine Befestigungseinrichtung (34) aufweist, die geeignet ist, mit einer komplementären Befestigungseinrichtung (60) eines der Flansche (6) zusammenzuwirken,
Ventil, bei dem der Kern außerdem in der mittleren Bohrung des Körpers drehbar montiert wird, damit:
• in einer ersten Drehstellung die Befestigungseinrichtung (34) des Kerns mit der komplementären Befestigungseinrichtung (60) des Flanschs (6) zusammenwirkt, um die Feder (4) in ihrer komprimierten Stellung zu halten;
• in einer zweiten Drehstellung die Befestigungseinrichtung (34) des Kerns sich von der komplementären Befestigungseinrichtung· (60) des Flanschs (6) befreit, um die Feder (4) freizugeben und es so dem Kern zu erlauben, von seiner ersten Gleitstellung in seine zweite Gleitstellung zu gleiten.

7. Mehrwegeventil (1) nach Anspruch 6, wobei der Kern einen Kopf (35) aufweist, der außerhalb eines der Flansche (5) angeordnet und geeignet ist, in Drehung zwischen der ersten Drehstellung und der zweiten Drehstellung des Kerns und umgekehrt betätigt zu werden, um den Kern zu befestigen oder die Feder freizugeben.

8. Mehrwegeventil (1) nach einem der vorhergehenden Ansprüche, wobei der Körper außerdem einen ersten Kanal (25), der die mittlere Bohrung (20) nach außen verbindet, und einen zweiten Kanal (26) aufweist, der die mittlere Bohrung (20) nach außen verbindet, wobei die Zonen, in denen der erste und der zweite Kanal in die mittlere Bohrung (20) münden, sich gegenüber der ersten Verengung (30) des Kerns (3) in seiner zweiten Gleitstellung befinden.

9. Mehrwegeventil (1) nach einem der vorhergehenden Ansprüche, das ein erstes Rückschlagventil (27) aufweist, das in eine der Hauptöffnungen (23) montiert ist.

10. Mehrwegeventil (1) nach Anspruch 9, wobei der Körper außerdem aufweist:
- einen dritten Kanal (29), der die mittlere Bohrung (20) mit der Hauptöffnung (23) verbindet, in die das erste Rückschlagventil (27) montiert ist;
- ein in den dritten Kanal montiertes zweites Rückschlagventil (28), wobei das zweite Rückschlagventil tariert ist, um sich zu öffnen, wenn das erste Rückschlagventil sich unterhalb eines vorbestimmten Drucks eines es versorgenden Fluids schließt.

11. Mehrwegeventil (1) nach einem der vorhergehenden Ansprüche, wobei die Verengungen (30, 31) des Kerns ein torusförmiges Profil haben.

12. System zur Strömung von Fluiden eines versenkten Behälters, das enthält:
- mindestens ein Ventil (1) nach einem der vorhergehenden Ansprüche, das senkrecht angeordnet ist,
- mindestens eine Fluidversorgungsleitung (8) in Fluidverbindung mit einer der Hauptöffnungen (23) des Ventils,
- mindestens eine Fluidwiedergewinnungsleitung (7) in Fluidverbindung mit einer anderen der Hauptöffnungen (21) des Ventils, die sich auf der gleichen Seite wie diejenige (23) in Fluidverbindung mit der Fluidverbindungsleitung befindet,
- mindestens einen Behälter (9), der aufweist:
• eine Zufuhröffnung (91) des Fluids in Fluidverbindung mit der anderen der Hauptöffnungen (24) des Ventils, die sich gegenüber der Öffnung (23) in Fluidverbindung mit der Fluidversorgungsleitung befindet,
• eine Wiedergewinnungsöffnung (90) des Fluids in Fluidverbindung mit der anderen der Hauptöffnungen (22) des Ventils, die sich gegenüber der Öffnung (21) in Fluidverbindung mit der Fluidwidergewinnungsleitung befindet.

13. System nach dem vorhergehenden Anspruch, das ein ortsfestes Gestell (10) mit einer Platte aufweist, die mindestens eine Blockierrille (12), die geeignet ist, einen Teil des Kerns (3) des Ventils aufzunehmen, und einen ortsfesten Anschlag (13) aufweist, wobei das Ventil (1) geeignet ist, von einer ersten inaktiven Stellung, in der ein Teil des Kerns, der bezüglich des Körpers (2) vorsteht, oder ggf. eines Flanschs (6) seitlich der Achse (X) des Körpers des Ventils gegen den Anschlag (13) in Anschlag ist, in eine zweite aktive Stellung verschoben zu werden, in der ein Teil des Kerns in die Rille (13) eindringt, um den Kern in seiner ersten Gleitstellung zu blockieren.

14. System nach einem der Ansprüche 12 oder 13, wobei der Behälter in Fluidverbindung mit einem zu bestrahlenden Ziel (11) innerhalb eines Atomreaktorgefäßes steht, wobei das System ein Strömungssystem eines Wärmeträgerfluids innerhalb des Ziels bildet.

15. Betriebsverfahren des Systems nach Anspruch 14, das die folgenden Schritte aufweist:
a/ im Fall der Bestrahlung des Ziels (11), Positionierung des Kerns des Ventils in seiner ersten Gleitstellung, Versorgung des Inneren des Behälters (9, 91, 92) mit Wärmeträgerfluid durch die Versorgungsleitung (8), zwei der einander gegenüberliegenden Hauptöffnungen (23, 24) über die Verengung (31) des Kerns, und Wiedergewinnung des Wärmeträgerfluids vom Inneren des Behälters (9, 93, 90) durch die zwei anderen einander gegenüberliegenden Hauptöffnungen (22, 21) über die Verengung (30) des Kerns;
b/ im Fall der Entladung/Ladung des Ziels (11), Positionierung des Kerns des Ventils in seiner zweiten Gleitstellung, Fluidversorgung des Inneren des Behälters (9, 91, 92) ausgehend vom Inneren des Gefäßes durch einen der Kanäle (33) des Kerns und eine der zwei Hauptöffnungen (24), und Wiedergewinnung des Fluids vom Inneren des Behälters (9, 93, 90) durch eine der zwei anderen Hauptöffnungen (22) und durch den anderen Kanal (32) des Kerns zum Inneren des Gefäßes.

## Claims

1. Multi-way sliding valve (1) comprising:
- a body (2) which extends along a central axis (X) and through which passes a central bore (20) that opens on either side of the body; and through which pass at least four main orifices (21, 22, 23, 24) that are arranged in pairs on either side of the central axis (X), each of the main orifices opening at one end onto the exterior of the body and at the other end onto the central bore, being opposite another of the main orifices;
- a generally cylindrical core (3) comprising two contractions (30, 31) of diameter that are spaced apart from one another by a distance corresponding to the axial separation between two main orifices (21, 22; 23, 24) of the body, the core having, passing through it, two channels (32, 33) of which one (33) opens at one end onto one of the axial ends of the core and at the other end onto its radial periphery between the two contractions (30, 31), and of which the other (32) opens at one end onto the other of the axial ends of the core and at the other end onto its radial periphery between one (30) of the two contractions and the other of the axial ends of the core,
in which valve the core is mounted at least so as to slide in the central bore of the body such that:
• in a first sliding position, the main orifices facing one another are fluidically connected in pairs (21, 22; 23, 24) by means of one of the contractions (30, 31) while the two channels (32, 33) do not open into the main orifices;
• in a second sliding position, the two channels (32, 33) each open into one of the two main orifices (22, 24) that are located on the same side of the central axis of the body while no two main orifices (21 to 24) are fluidically connected to one another.

2. Multi-way valve (1) according to Claim 1, further comprising a return means (4) for moving and holding the core from its first sliding position to its second sliding position.

3. Multi-way valve (1) according to Claim 2, the return means (4) being a spring.

4. Multi-way valve (1) according to Claim 3, the spring (4) being a compression spring.

5. Multi-way valve (1) according to one of Claims 1 to 3, further comprising removable flanges (5, 6), each arranged opposite one of the axial ends of the core and designed to contain the core between its first and its second sliding position and vice versa.

6. Multi-way valve (1) according to Claim 2 to 4 in combination with Claim 5, the core further comprising a latching means (34) designed to engage with a complementary latching means (60) of one of the flanges (6),
in which valve the core is further mounted so as to be able to rotate in the central bore of the body such that:
• in a first rotational position, the latching means (34) of the core engages with the complementary latching means (60) of the flange (6), so as to hold the spring (4) in its compressed position;
• in a second rotational position, the latching means (34) of the core disengages from the complementary latching means (60) of the flange (6), so as to release the spring (4) and thus allow the core to slide from its first sliding position to its second sliding position.

7. Multi-way valve (1) according to Claim 6, the core comprising a head (35) that is arranged outside one of the flanges (5) and is designed to be turned between the first rotational position and the second rotational position of the core and vice versa, so as to latch the core or release the spring.

8. Multi-way valve (1) according to one of the preceding claims, the body further comprising a first channel (25) connecting the central bore (20) to the outside and a second channel (26) connecting the central bore (20) to the outside, the regions in which the first and the second channel open into the central bore (20) being opposite the first contraction (30) of the core (3) in its second sliding position.

9. Multi-way valve (1) according to one of the preceding claims, comprising a first check valve (27) mounted in one of the main orifices (23).

10. Multi-way valve (1) according to Claim 9, the body further comprising:
- a third channel (29) connecting the central bore (20) to the main orifice (23) in which is mounted the first check valve (27);
- a second check valve (28) mounted in the third channel, the second check valve being preloaded to open when the first check valve closes below a predetermined pressure of a fluid being supplied to it.

11. Multi-way valve (1) according to one of the preceding claims, the contractions (30, 31) of the core having a toroidal profile.

12. Fluid circulation system of a submerged enclosure, comprising:
- at least one valve (1) according to one of the preceding claims, arranged vertically,
- at least one fluid supply line (8) fluidically connected to one of the main orifices (23) of the valve,
- at least one fluid recovery line (7) fluidically connected to another of the main orifices (21) of the valve, this orifice being located on the same side as that (23) fluidically connected to the fluid supply line,
- at least one enclosure (9) comprising:
• a fluid inlet orifice (91) fluidically connected to the other of the main orifices (24) of the valve, this orifice being located opposite the orifice (23) fluidically connected to the fluid supply line,
• a fluid recovery orifice (90) fluidically connected to the other of the main orifices (22) of the valve, this orifice being located opposite the orifice (21) fluidically connected to the fluid recovery line.

13. System according to the preceding claim, comprising a fixed frame (10) with a plate comprising at least one immobilizing groove (12) that is designed to accommodate part of the core (3) of the valve and a fixed stop (13), the valve (1) being designed to be moved from a first inactive position in which part of the core that projects with respect to the body (2) or, as the case may be, from a flange (6) abuts laterally to the axis (X) of the valve body against the stop (13), to a second active position in which part of the core is accommodated in the groove (13) so as to immobilize the core in its first sliding position.

14. System according to one of Claims 12 and 13, the enclosure being fluidically connected to a target (11) that is to be irradiated within a nuclear reactor vessel, the system constituting a system for circulating a heat transfer fluid inside the target.

15. Operational process of the system according to Claim 14, comprising the following steps:
a) in the case of irradiation of the target (11), positioning the core of the valve in its first sliding position, supplying heat transfer fluid to the interior of the enclosure (9, 91, 92) respectively via the supply line (8), two of the main orifices (23, 24) opposite one another passing via the contraction (31) of the core, and recovering the heat transfer fluid from the interior of the enclosure (9, 93, 90) respectively via the two other main orifices (22, 21) opposite one another passing via the contraction (30) of the core;
b) in the case of loading/unloading of the target (11), positioning the core of the valve in its second sliding position, supplying fluid from the interior of the vessel to the interior of the enclosure (9, 91, 92) respectively via one of the channels (33) of the core and one of the two main orifices (24), and recovering the fluid from the interior of the enclosure (9, 93, 90) respectively via one of the two other main orifices (22) and via the other channel (32) of the core to the interior of the vessel.
